# EUROPÄISCHE PATENTANMELDUNG

(11) **EP 1 675 069 A2**
(43) Veröffentlichungstag der Anmeldung: **28.06.2006**
(21) Anmeldenummer: 05111633.3
(22) Anmeldetag: 02.12.2005
(51) Int. Cl.: G07B 15/00

(54) **Maut-Gerät zum Einbau in ein Fahrzeug**

(30) Priorität: 27.12.2004 DE 102004062663
(71) Anmelder: SIEMENS AKTIENGESELLSCHAFT, 80333 München (DE)
(72) Erfinder: Schild, Raoul, 1040, Wien (AT); Schradi, Stefan, 78048, Villingen-Schwenningen (DE)

(57) **Zusammenfassung**

Die Erfindung betrifft ein Maut-Gerät zum Einbau in ein Fahrzeug mit einem Basisgerät (1) und einer Halteeinheit (2). In der Halteeinheit (2) sind mindestens ein Sende- und Empfangsmodul für eine Nahbereichskommunikation, ein Empfangsmodul zum Empfang von Positions-Sensorsignalen und ein Versorgungseingang (7) zum Anlegen einer externen Versorgungsspannung enthalten. Wird die Halteeinheit (2) mit dem Basisgerät (1) schnell lösbar verbunden, kann das Basisgerät (1) zu Service- und Wartungszwecken ohne viel Aufwand aus- und wieder eingebaut werden.

## Beschreibung

Die Erfindung betrifft ein Maut-Gerät zum Einbau in ein Fahrzeug mit einem Basisgerät und einer Halteeinheit. Unter dem Begriff Fahrzeug werden insbesondere Personenkraftwagen, Lastkraftwagen oder Schiffe verstanden.

Aus der nicht vorveröffentlichten, deutschen Patentanmeldung mit dem Aktenzeichen 10329784.7 ist ein Maut-Gerät zum Einbau in ein Kraftfahrzeug bekannt, welches aus einem Basisgerät und einem Haltearm besteht. Der Haltearm ist an der Windschutzscheibe befestigbar und das Basisgerät, also der eigentliche Mautrechner, wird auf der Armaturentafel des Fahrzeuges abgestützt. Der Haltearm kann dabei als ein ein Sende- und Empfangsmodul für Mikrowellen-Kommunikation aufnehmendes Gehäuse ausgebildet sein. In dem Mautrechner sind unter anderem enthalten ein GPS-Empfänger, eine Verarbeitungselektronik mit entsprechenden Rechner- und Speichereinheiten und eine Displaybaugruppe.

Die Unterbringung des GPS-Empfängers im Mautrechner kann je nach der Positionierung des Mautrechners im Fahrzeug sowie durch EMV- und Abschattungsphänomene innerhalb des Mautrechners zu Problemen beim Empfang der GPS-Signale führen. Des weiteren erfordert der Einbau des Maut-Gerätes in das Fahrzeug einige Arbeitsschritte, was sich insbesondere bei wiederholtem Einbau aufgrund von erforderlichen Service- und Wartungsarbeiten am Maut-Gerät negativ bemerkbar macht. So sind nicht nur der Haltearm an der Windschutzscheibe und das Basisgerät auf dem Armaturenbrett zu befestigen, sondern an das Basisgerät ist eine Spannungsversorgung anzuschließen. Wird die GPS-basierte Positionsermittlung mit dem bekannten Verfahren der Koppelnavigation gestützt, so sind an das Basisgerät zusätzliche Sensorsignale zu liefern, d.h. es müssen weitere analoge bzw. digitale Datenleitungen an das Basisgerät angeschlossen werden. Bei einer weiterhin geforderten Mobilfunkkommunikation ist an das Basisgerät außerdem eine Leitung anzuschließen, die eine Verbindung zu einer Mobilfunkantenne herstellt.

Aufgabe der vorliegenden Erfindung ist es, das bekannte Maut-Gerät hinsichtlich der Funktion und Handhabbarkeit zu verbessern.

Diese Aufgabe wird mit einem Maut-Gerät nach Anspruch 1 gelöst.

Erfindungsgemäß ist in der Halteeinheit des Maut-Gerätes nicht nur ein Sende- und Empfangsmodul für eine Nahbereichskommunikation angeordnet, sondern es sind zusätzlich ein Empfangsmodul zum Empfang von Positions-Sensorsignalen und ein Versorgungseingang zum Anschluss einer externen Versorgungsspannung enthalten. Alternativ zu oder gemeinsam mit dem Versorgungseingang ist ein interner Energiespeicher, insbesondere ein Akkumulator, vorgesehen, mit dem das Maut-Gerät vorübergehend unabhängig von einer externen Versorgungsspannung betrieben werden kann.

Nahezu sämtliche Installations- und Einbauschritte können gemäß der Erfindung auf die Halteeinrichtung des Maut-Gerätes beschränkt werden. Wird die Halteeinrichtung an bzw. in der Nähe der Windschutzscheibe des Fahrzeugs angebracht, ist stets ein ausreichend guter Empfang der Positions-Sensorsignale, insbesondere von GPS-Signalen, gewährleistet. Nachdem die Halteeinrichtung eingebaut und die Spannungsversorgung angeschlossen ist, kann das Basisgerät an der Halteeinrichtung über schnell lösbare Verbindungen, wie Bajonett-, Schraub- oder Steckverbindungen befestigt werden. Somit wird ein schneller Aus- und Wiedereinbau des Basisgerätes möglich, was insbesondere für Wartungs- und Servicearbeiten vorteilhaft ist.

Unter einem Sende- und Empfangsmodul für eine Nahbereichskommunikation wird insbesondere ein DSRC-Modul verstanden.

Aber auch andere Übertragungssysteme, beispielsweise basierend auf Mikrowellen-, Infrarot-, Ultraschall- oder Bluetooth-Datenübertragung, sind denkbar.

Die Versorgungsspannung und die in der Halteeinrichtung empfangenen bzw. zu versendenden Daten werden entweder über Steck- oder Presskontakte oder über berührungslose Kontakte zwischen der Halteeinheit und dem Basisgerät übertragen, wobei auch eine gemischte Ausführung vorliegen kann, bei der beispielsweise die Versorgungsspannung über Steckkontakte und die Daten berührungslos weitergegeben werden. Auf diese Weise entfällt jeglicher Verkabelungsaufwand, d.h. ein mechanisches Zusammenfügen von Halteeinheit und Basisgerät stellt gleichzeitig alle erforderlichen elektrischen Verbindungen her.

In einer erweiterten Ausführung ist in der Halteeinheit mindestens ein Signaleingang zur leitungsgebundenen Zuführung von weiteren Sensorsignalen vorhanden ist. Insbesondere bei der Stützung der empfangenen Positions-Sensorsignale über weitere positionsbezogene Daten, wie zurückgelegter Weg, Geschwindigkeit, Orientierung oder Gierrate, können diese weiteren Signale analog oder über einen Datenbus in die Halteeinheit eingespeist und von dort an das Basisgerät übertragen werden. Je mehr externe Anschlüsse vom Basisgerät in die Halteeinheit verlagert werden, desto geringer wird der Aufwand insbesondere beim wiederholten Aus- und Einbau des Basisgerätes.

In einer anderen Ausführung ist anstelle der Schnittstelle zu einer Sensoreinheit die Sensoreinheit selbst in der Halteeinheit untergebracht. Beispielsweise kann ein standardmäßig nicht im Fahrzeug vorhandener Gierratensensor, wie ein Gyroskop, auf diese Weise einfach nachgerüstet werden. Der Verkabelungsaufwand zum Maut-Gerät wird damit weiter reduziert.

In einer weiteren Ausgestaltung ist zusätzlich ein Sende- und Empfangsmodul für eine Fernbereichskommunikation, beispielsweise eine GSM-/GPRS-Antenne, in der Halteeinheit angeordnet. Hierbei wird zum einen wieder der Vorteil erzielt, dass ein externer Anschluss zu einer solchen Antenne entfällt, was den Installationsaufwand des Maut-Gerätes vermindert. Gegenüber der Unterbringung in dem Basisgerät wird zum anderen die bereits bei der GPS-Antenne beschriebene Möglichkeit der Anbringung an einer Windschutzscheibe eröffnet, woraus ein verbesserter Empfang resultiert.

Um die in der Halteeinheit befindlichen Sende- und/oder Empfangsmodule noch besser ausrichten zu können, ist es in einer besonderen Ausgestaltung der Erfindung vorgesehen, dass ein Bereich der Halteeinheit, in dem mindestens eines dieser Module enthalten ist, gegenüber dem übrigen Teil der Halteeinheit schwenkbar ausgeführt ist. Bei unterschiedlich geneigten Windschutzscheiben bietet dies beispielsweise den Vorteil, dass die Sende- und/oder Empfangsmodule stets in dieselbe Lage gegenüber dem Fahrzeugboden gebracht werden können.

In einer bevorzugten Ausgestaltung der Erfindung wird das Maut-Gerät mittels eines Befestigungskörpers an einer Scheibe des Fahrzeugs befestigt, wobei der Befestigungskörper und die Halteeinheit mechanisch miteinander verbunden sind. Als Scheibe wird im allgemeinen die Windschutzscheibe gewählt, da diese durch ihre leichte Neigung einen besseren Funksignal-Empfang ermöglicht als beispielsweise die eher senkrecht angeordneten Seitenscheiben und da die Windschutzscheibe im allgemeinen leicht vom Fahrer erreicht und eingesehen werden kann, was die Bedienung des Maut-Gerätes vereinfacht. Alternative Befestigungen an seitlichen Scheiben sind jedoch ebenfalls denkbar.

Vorteilhafterweise lässt der Befestigungskörper einen Lüftungskanal offen, durch den sich Luft entlang der Oberfläche der Scheibe bewegen kann. Ein Trocknen oder Entfrosten der Scheibe wird somit nicht beeinträchtigt.

Eine Ausgestaltung des Befestigungskörpers sieht vor, dass dieser in seiner geometrischen Form so an die Neigung der Scheibe angepasst ist, dass die Halteeinheit eine vorgegebene Ausrichtung zum Fahrzeugboden einnimmt. Dies ist insbesondere von Vorteil, wenn die Halteeinheit keinen schwenkbaren Bereich aufweist, da auf diese Weise sichergestellt werden kann, dass die in der Halteeinheit enthaltenen Sende- und Empfangsmodule eine gewünschte, guten Empfang sicherstellende Ausrichtung erfahren.

Der Befestigungskörper ist in einer speziellen Ausgestaltung mit der Halteeinheit einstückig ausgeführt. Dieser Fall ist besonders geeignet für fest installierte Maut-Geräte, deren Basisgerät lediglich für Wartungs- und Servicearbeiten aus dem Fahrzeug entfernt und später wieder eingebaut werden muss.

Demgegenüber sieht eine andere Ausgestaltung vor, dass der Befestigungskörper als Einzelkörper ausgeführt ist, der aus transparentem Material besteht. Ein solcher Einzelkörper kann nahezu ohne optische Beeinträchtigung dauerhaft an einer Scheibe des Fahrzeugs befestigt werden. Ein Maut-Gerät wird dann nur bei Bedarf an dem Befestigungskörper befestigt. Diese Ausführung ist besonders für Anwendungsfälle geeignet, bei denen ein Maut-Gerät nur für eine gewisse Zeit leihweise zur Verfügung gestellt und danach wieder eingezogen wird. Beispielsweise können Maut-Geräte leihweise an ausländische Fahrzeuge vergeben werden, wenn diese die Grenze zu einem mautpflichtigen Land oder Gebiet überschreiten. Der Befestigungskörper wird vom Fahrzeugführer käuflich erworben und in seinem Fahrzeug dauerhaft befestigt. Das Maut-Gerät jedoch erhält er nur für die Dauer seines Aufenthaltes in dem mautpflichtigen Land ausgehändigt. Auf diese Art und Weise können die Kosten für ein Maut-System auf Seiten der Benutzer gering gehalten werden, was die Akzeptanz des Systems erhöht.

In einer Unterausführung ist der Befestigungskörper mit der Halteeinheit über eine Keilverbindung lösbar verbunden. Bevorzugt ist dabei der Befestigungskörper in Keilform ausgestaltet, auf dem die Halteeinheit aufgeschoben und durch Kraftschluss befestigt wird. Da keinerlei Zusatzmittel zur Befestigung erforderlich sind, wie Schrauben, Muttern oder Verschlüsse, ist damit eine Montage des Maut-Gerätes besonders schnell und einfach möglich.

Zusätzlich zur Keil -Verbindung oder auch als einzelne Verbindungslösung ist weiterhin vorgesehen, dass der Befestigungskörper und die Halteeinheit über eine Nut-Feder-Verbindung miteinander verbunden sind. Bevorzugt ist dabei die Feder an dem Befestigungskörper ausgeführt, welche von einer Nut an der Halteeinheit umschlossen wird. Eine Alternative zu einer Keil- oder einer Nut-Feder-Verbindung besteht beispielsweise in einer Haken-Ösen-Verbindung, bei der der Befestigungskörper in Form eines Hakens ausgeführt ist, der in eine Öffnung in der Halteeinheit eingreift.

Die Erfindung wird nachfolgend anhand von Ausführungsbeispielen und der Zeichnung näher erläutert. Es zeigen
- Figur 1: ein an einer Windschutzscheibe montiertes Maut-Gerät;
- Figur 2: ein Befestigungskörper;
- Figur 3: ein mit dem Befestigungskörper aus Fig. 2 montiertes Maut-Gerät an einer geraden Scheibe;
- Figur 4: das Maut-Gerät und der Befestigungskörper aus Fig. 3 an einer geneigten Scheibe;
- Figur 5: das Maut-Gerät aus Fig. 3 und ein angepasster Befestigungskörper an einer geneigten Scheibe;
- Figur 6: ein Maut-Gerät mit einstückiger Halteeinheit inklusive Befestigungskörper;
- Figur 7: das Maut-Gerät aus Fig. 6 an einer geneigten Scheibe.

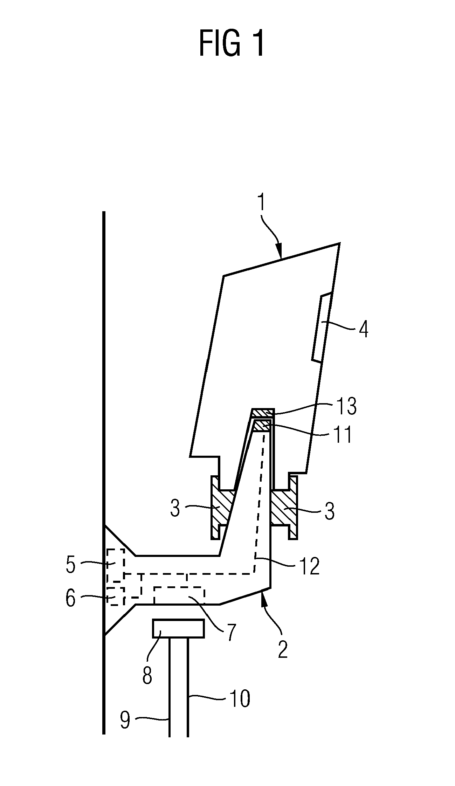

Das in Figur 1 dargestellte Maut-Gerät besteht aus einem Basisgerät 1 und einer Halteeinheit 2, an dem das Basisgerät über Schnellverschlüsse 3 rüttelfest befestigt ist. Die Schnellverschlüsse 3 sind beispielsweise als Bajonett-, Schraub- oder Steckverbindungen ausgeführt. In dem Basisgerät 1 ist ein Anzeigedisplay 4 integriert, zur grafischen Anzeige von mautrelevanten Informationen. In der Halteeinheit 2 sind ein Antennenmodul 5 und ein Gyrosensor 6 enthalten, wobei zu dem Antennenmodul 5 gehören ein DSRC-Sende- und Empfangsmodul, ein GSM-Sende- und Empfangsmodul sowie ein GPS-Empfangsmodul. Weiterhin ist in der Halteeinheit 2 eine Eingangsschnittstelle 7 vorgesehen, an die die Steckereinheit 8 angeschlossen werden kann. In der Steckereinheit 8 werden eine Versorgungsleitung 9 zum Anlegen einer Versorgungsspannung sowie eine Datenleitung 10 zur Zuführung von Signalen eines nicht dargestellten Tachogebers zusammengeführt. Ausgehend von der Eingangsschnittstelle 7 wird die Versorgungsspannung an das Antennenmodul 5, den Gyrosensor 6 sowie eine Kontakteinheit 11 weitergeleitet. Ebenso werden die Signale des Tachogebers, des Antennenmoduls 5 und des Gyrosensors 6 zu bzw. von der Kontakteinheit 11 übertragen. Die Verteilung der Versorgungsspannung und die Signalübertragung sind in Figur 1 durch die kombinierte Energie- und Datenleitung 12 angedeutet. Anstelle einer Leitung 12 können natürlich verschiedene Leitungen bzw. Datenbusse vorgesehen sein.

In dem in Figur 1 dargestellten zusammengebauten Zustand des Basisgerätes 1 mit der Halteeinheit 2 befindet sich gegenüberliegend zur Kontakteinheit 11 der Halteeinheit 2 eine Kontakteinheit 13. Die Kontakteinheit 13 bildet zur Kontakteinheit 11 das passende Gegenstück. Die Kontakteinheiten 11 und 13 können als Steckkontakte, Presskontakte oder berührungslose Kontakte oder als Kombinationen davon ausgeführt sein. Über die Kontakteinheiten 11 und 13 wird also die Versorgungsspannung an das Basisgerät geliefert und es werden die Signale des Gyrosensors 6 und des Tachogebers empfangen sowie die Daten von und zum Antennenmodul 5 übertragen.

Die Halteeinheit 2 ist an einer Windschutzscheibe 14 eines Kraftfahrzeugs befestigt.

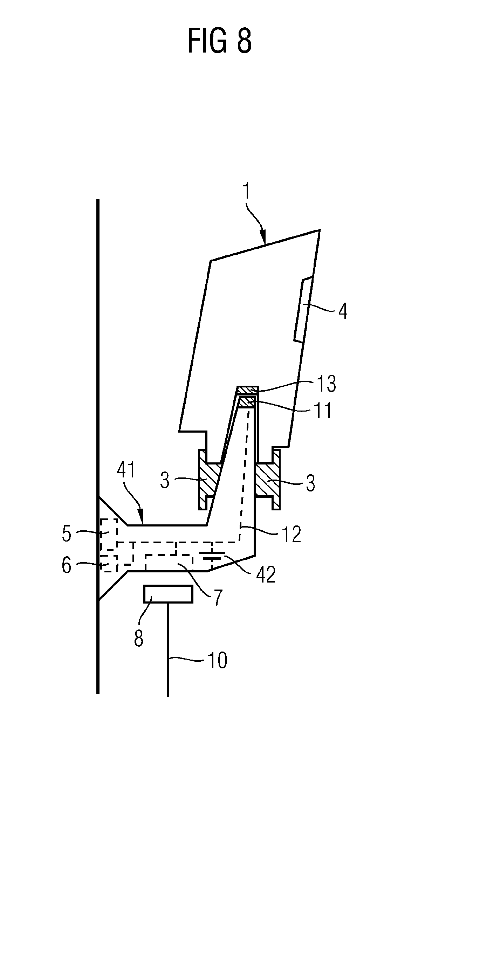

Das in Figur 8 dargestellte Maut-Gerät unterscheidet sich von dem Gerät aus Figur 1 lediglich darin, dass in der Halteeinheit 41 anstelle der Anschlussmöglichkeit für die Versorgungsleitung 9 ein interner Energiespeicher 42 in Form eines Akkumulators vorhanden ist, der das Antennenmodul 5, den Gyrosensor 6 sowie die Kontakteinheit 11 mit der erforderlichen Spannung versorgt. Aufgrund dieser Ausgestaltung wird der Installationsaufwand des Maut-Gerätes weiter reduziert, da keine Verkabelung zum Versorgungsnetz des Fahrzeugs erforderlich ist. Lediglich die Datenleitung 10 muss angeschlossen werden.

Um die Vorteile der Unabhängigkeit von einer Versorgungsleitung auf der einen Seite und die ständige Verfügbarkeit des Fahrzeug-Versorgungsnetzes auf der anderen Seite je nach Bedarf nutzen zu können, sind alternativ auch beide Versorgungsarten im Maut-Gerät vorsehbar, d.h. sowohl ein interner Energiespeicher 42 als auch eine Anschlussmöglichkeit in der Eingangsschnittstelle 7 für eine Versorgungsleitung 9.

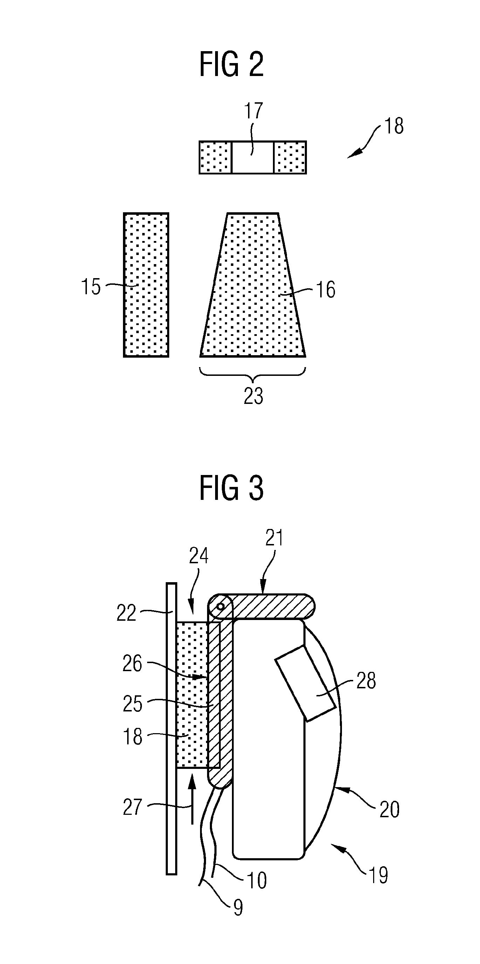

Verschiedene Ausgestaltungen der Befestigung der Halteeinheit 2 bzw. 41 an einer Scheibe eines Fahrzeugs sind in den Figuren 2 bis 7 dargestellt.

In Figur 2 sind die Seitenansicht 15, die Vorderansicht 16 und die Sicht von oben auf einen Befestigungskörper 18 zu sehen. Der Befestigungskörper 18 besteht aus einem transparenten Kunststoffmaterial und ist als oben und unten offener Hohlkörper mit trapezförmiger Vorder- und Rückfläche ausgebildet.

Die Figur 3 verdeutlicht die Befestigung eines Maut-Gerätes 19, bestehend aus einem Basisgerät 20 inklusive Display 28 und einer Halteeinheit 21, an einer Scheibe 22 eines Fahrzeugs. Der Befestigungskörper 18 liegt mit seiner trapezförmigen Rückfläche auf der Scheibe auf und ist auf ihr durch Kleben befestigt. In der dem Befestigungskörper 18 zugewandten Rückwand 26 der Halteeinheit 21 ist eine quader- bzw. trapezförmige Vertiefung eingelassen, die an ihrer breitesten Stelle eine geringere Ausdehnung aufweist als die maximale Breite 23 des Befestigungskörpers 18 (s. Figur 2). Schiebt man die Halteeinheit 21 aus der Richtung 24 auf den Befestigungskörper 18, so drücken die Seitenflächen 15 des breiteren Befestigungskörpers 18 von innen gegen die Seitenkanten 25 der Vertiefung in der Rückwand 26. Auf diese Weise entsteht eine fahrzeugtaugliche und gleichzeitig schnell wieder lösbare Keilverbindung zwischen Halteeinheit 21 und Befestigungskörper 18.

Durch die Ausführung des Befestigungskörpers 18 als oben und unten offener Hohlkörper kann eine zur Trocknung bzw. Enteisung der Scheibe 22 vorgesehene Luftströmung 27 nahezu ungehindert durch den Befestigungskörper 18 hindurchtreten und die umliegenden Teile der Scheibe 22 erreichen. In einer Weiterbildung kann auch die in diesem Beispiel als Vollfläche ausgeführte Rückseite des Befestigungskörpers 18 als Teilfläche ausgeführt sein, um auch den Bereich der Scheibe 22 direkt hinter dem Befestigungskörper 18 von Luft überströmen zu lassen. Anstelle der oder zusätzlich zur Keilverbindung zwischen Befestigungskörper 18 und Halteeinheit 21 kann eine Nut-Feder-Verbindung vorgesehen sein, beispielsweise indem in die inneren Seitenkanten 25 der Vertiefung in der Rückwand 26 eine Nut eingebracht ist, in die jeweils eine an den Seitenflächen 15 des Befestigungskörpers 18 angeformte Feder eingreift.

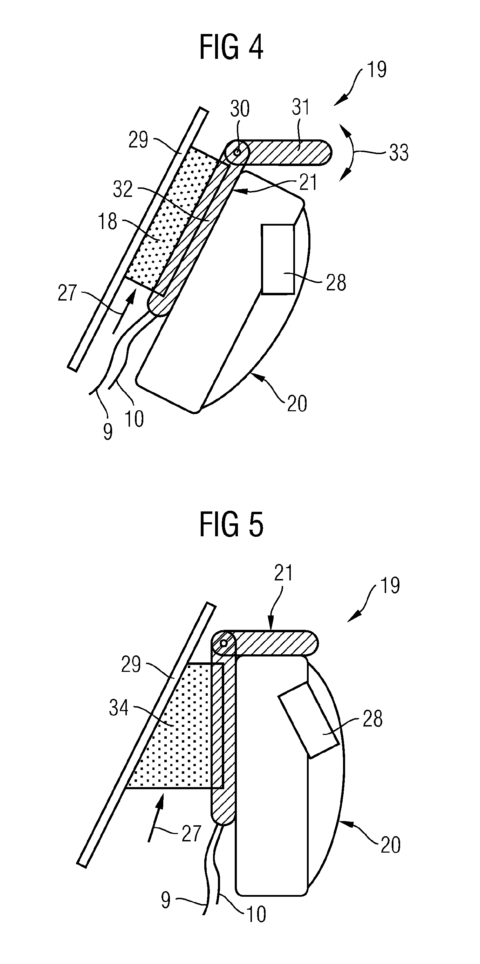

In Figur 4 ist das Maut-Gerät 19 aus Figur 3 an einer geneigten Scheibe 29 befestigt. Die Halteeinheit 21 ist in zwei Bereiche unterteilt, die über ein Gelenk 30 miteinander verbunden sind. Im Bereich 31 befindet sich in dieser Ausführung ein GSM-Sende- und Empfangsmodul sowie ein GPS-Empfangsmodul. Da diese beiden Module zur Sicherstellung guter Empfangsbedingungen möglichst waagerecht zum Fahrzeugboden und dabei nach oben frei abstrahlend ausgerichtet sein sollten, wird der Bereich 31 entsprechend um das Gelenk 30 geschwenkt, wie durch den Richtungspfeil 33 angedeutet ist. Im Bereich 32 ist ein DSRC-Sende- und Empfangsmodul untergebracht. Das Display 28 ist in dem Basisgerät 20 schräg angeordnet worden, damit nach einer Montage an einer schrägen Scheibe entsprechend der Figuren 4, 5 und 7 ein gerades Ablesen des Displays 28 möglich wird.

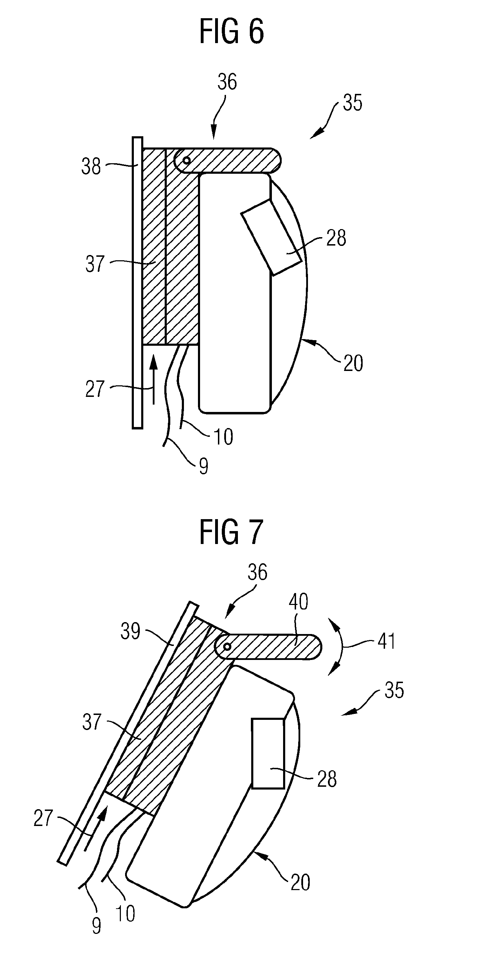

Alternativ zum Verschwenken des Bereichs 31 ist in Figur 5 eine Lösung dargestellt, bei der die waagerechte Positionierung der GSM- und GPS-Module durch einen entsprechend geformten Befestigungskörper 34 erreicht wird. Der Befestigungskörper 34 unterscheidet sich vom Befestigungskörper 19 nur in der Gestaltung der Seitenflächen, die nicht mehr quaderförmig sind sondern die Form eines einseitigen Trapezes haben, entsprechend der Neigung der Scheibe 29.

In den Figuren 6 und 7 ist ein Mautgerät 35 abgebildet, welches aus dem Basisgerät 20 sowie einer Halteeinheit 36 besteht, wobei die Halteeinheit 36 mit einem Befestigungskörper 37 einstückig ausgeführt ist. In Figur 6 ist der Einbau an einer geraden Scheibe 38 dargestellt und in Figur 7 der Einbau an einer geneigten Scheibe 39. Bei der geneigten Scheibe wird ein Bereich 40 gegenüber dem übrigen Teil der Halteeinheit 36 in Richtung 41 verschwenkt. Auch in dieser Ausführung des Befestigungskörpers 37 als Bestandteil der Halteeinheit 36 wird eine Luftströmung 27 nicht behindert.

## Patentansprüche

1. Maut-Gerät zum Einbau in ein Fahrzeug mit einem Basisgerät (1, 20) und einer Halteeinheit (2, 21, 36, 41), wobei in der Halteeinheit (2, 21, 36, 41) ein Sende- und Empfangsmodul für eine Nahbereichskommunikation, ein Empfangsmodul zum Empfang von Positions-Sensorsignalen sowie ein Versorgungseingang (7) zum Anlegen einer externen Versorgungsspannung und/oder ein interner Energiespeicher (42) enthalten sind.

2. System nach Anspruch 1, **dadurch gekennzeichnet, dass** die Übertragung der Versorgungsspannung und/oder von Daten zwischen der Halteeinheit (2, 41) und dem Basisgerät (1) über Steck- oder Presskontakte (11, 13) erfolgt.

3. System nach einem der Ansprüche 1 oder 2, **dadurch gekennzeichnet, dass** die Übertragung der Versorgungsspannung und/oder der Daten zwischen der Halteeinheit und dem Basisgerät berührungslos erfolgt.

4. System nach einem der vorhergehenden Ansprüche, **dadurch gekennzeichnet, dass** der interne Energiespeicher (42) ein Akkumulator ist.

5. System nach einem der vorhergehenden Ansprüche, **dadurch gekennzeichnet, dass** in der Halteeinheit (2, 41) mindestens ein Signaleingang (7) vorhanden ist zur leitungsgebundenen Zuführung von weiteren Sensorsignalen (10).

6. System nach einem der vorhergehenden Ansprüche, **dadurch gekennzeichnet, dass** in der Halteeinheit (2, 41) eine Sensoreinheit (6) enthalten ist.

7. System nach einem der vorhergehenden Ansprüche, **dadurch gekennzeichnet, dass** in der Halteeinheit (2, 41) ein Sende- und Empfangsmodul für eine Fernbereichskommunikation enthalten ist.

8. System nach einem der vorhergehenden Ansprüche, **dadurch gekennzeichnet, dass** ein Bereich (31, 40) der Halteeinheit (21, 36) in dem mindestens ein Sende- und/oder Empfangsmodul enthalten ist, gegenüber der übrigen Halteeinheit (32) schwenkbar ausgeführt ist.

9. System nach einem der vorhergehenden Ansprüche, **dadurch gekennzeichnet, dass** das Mautgerät an einer Scheibe (14, 22, 29, 38, 39) des Fahrzeugs befestigt ist, wobei ein auf der Scheibe (14, 22, 29, 38, 39) aufgebrachter Befestigungskörper (18, 34, 37) mit der Halteeinheit (21, 36) mechanisch verbunden ist.

10. System nach Anspruch 9, **dadurch gekennzeichnet, dass** der Befestigungskörper (18, 34, 37) einen Lüftungskanal offen lässt, durch den sich Luft (27) entlang der Oberfläche der Scheibe (14, 22, 29, 38, 39) bewegen kann.

11. System nach einem der vorhergehenden Ansprüche 9 oder 10, **dadurch gekennzeichnet, dass** der Befestigungskörper (34) in seiner geometrischen Form so an die Neigung der Scheibe (29) angepasst ist, dass die Halteeinheit (21) eine vorgegebene Ausrichtung zum Fahrzeugboden einnimmt.

12. System nach einem der vorhergehenden Ansprüche 9 bis 11, **dadurch gekennzeichnet, dass** der Befestigungskörper (18) aus einem transparenten Material besteht.

13. System nach einem der vorhergehenden Ansprüche 9 bis 12, **dadurch gekennzeichnet, dass** der Befestigungskörper (37) mit der Halteeinheit (36) einstückig ausgeführt ist.

14. System nach einem der vorhergehenden Ansprüche 9 bis 12 **dadurch gekennzeichnet, dass** der Befestigungskörper (18, 34, 37) und die Halteeinheit (21, 36) über eine Keilverbindung miteinander verbunden sind.

15. System nach einem der vorhergehenden Ansprüche 9 bis 12 oder 13, **dadurch gekennzeichnet, dass** der Befestigungskörper und die Halteeinheit über eine Nut-Feder-Verbindung miteinander verbunden sind.
